# EUROPÄISCHE PATENTANMELDUNG

(11) **EP 2 671 738 A2**
(43) Veröffentlichungstag der Anmeldung: **11.12.2013**
(21) Anmeldenummer: 13002735.2
(22) Anmeldetag: 27.05.2013
(51) Int. Cl.: B60D 1/54, B60D 1/24

(54) **Betätigungssystem für eine Anhängekupplung eines Kraftfahrzeugs**

(30) Priorität: 04.06.2012 DE 102012011069
(71) Anmelder: WESTFALIA - Automotive GmbH, 33378 Rheda-Wiedenbrück (DE)
(72) Erfinder: Friedhelm, Söffge, D-71229 Leonberg (DE)
(74) Vertreter: Bregenzer, Michael

(57) **Zusammenfassung**

Ein Betätigungssystem (11) ist für eine Anhängekupplung eines Kraftfahrzeugs gestaltet, die einen an einem Kugelhalslagerkopf (3) gehaltenen Kugelhals (5) aufweist, welcher Kugelhalslagerkopf mit einem Verriegelungsmechanismus (8) für den Kugelhals in einer Betriebsstellung und einer Ruhestellung festlegbar ist, wobei der Verriegelungsmechanismus (8) einen axialbeweglichen in dem Kugelhalslagerkopf gelagerten Sperrbolzen zum Ein- und Ausrücken des Verriegelungsmechanismus (8) umfasst.

Zur Optimierung der Anhängekupplung verfügt das Betätigungssystem (11) neben dem Verriegelungsmechanismus (8) des Kugelhalslagerkopfs über einen Schwenkmechanismus (13) für die aus Kugelhals und Kugelhalslagerkopf bestehende Baueinheit (14), wobei zwischen dem Verriegelungsmechanismus (8) und dem Schwenkmechanismus ein eine Ablaufsteuerung bewirkendes Getriebesystem (15) vorgesehen ist, das von einem Elektromotor (16) in der Weise beeinflusst wird, dass zunächst der Verriegelungsmechanismus (8) und danach der Schwenkmechanismus aktiviert wird.

## Beschreibung

Die Erfindung bezieht sich auf ein Betätigungssystem für eine Anhängekupplung eines Kraftfahrzeugs, die einen an einem Kugelhalslagerkopf gehaltenen Kugelhals aufweist, nach dem Oberbegriff des Patentanspruchs 1.

Es ist eine Anhängekupplung für ein Kraftfahrzeug bekannt, DE 103 20 302 A1, die eine Kugelstange umfasst. Die Kugelstange ist einerseits mit einem Kugelstangenlagerkopf fest verbunden und an einem freien Endbereich mit einer Kupplungskugel versehen. Der Kugelstangenlagerkopf ist an einem Aufbau des Kraftfahrzeugs gehalten, wobei über einen drehbaren Lagerkopfbereich des Kugelstangenlagerkopfs die Kugelstange zwischen einer Betriebslage und einer Ruhelage verstellbar ist. Innerhalb des Kugelstangenlagerkopfs ist eine Verriegelung mit einem Sperrbolzen wirksam, der mit einem Handrad-Auslösemechanismus aus einer Verriegelungsstellung in eine Entriegelungsstellung verbringbar ist.

In der DE 20 2006 011 346 U1 wird eine Anhängevorrichtung für Kraftfahrzeuge offenbart, die einen Kugelhals umfasst. Letzterer ist um mindestens zwei translatorische Achsen beweglich und an einem Gestell der Anhängevorrichtung gelagert. Diese Anhängevorrichtung verfügt über einen mechanischen Antrieb zur Bewegung des Kugelhalses zwischen einer Betriebsstellung und einer Ruhestellung. Der Antrieb besteht aus einem Antriebsmotor, der ein Elektromotor -Getriebemotor- sein kann. Und dieser Antrieb weist eine Einrichtung zur Erzeugung einer zumindest bereichsweise überlagerten Rotationsbewegung des Kugelhalses um die beiden Achsen auf. In der Anhängevorrichtung ist eine Verriegelung des Kugelhalses in beiden Endstellungen vorgesehen.

Gemäß der EP 1 650 059 B1 ist eine Anhängekupplung für Kraftfahrzeuge an einem ortsfesten Querträger des jeweiligen Fahrzeugs angeordnet. Eine Kugelstange ist in einem verschwenkbaren Kupplungsgehäuse vorgesehen und lässt sich von einer Betriebsstellung in eine Ruhestellung und umgekehrt bewegen. Die Antriebseinrichtung besitzt einen elektrischen Antriebsmotor und arbeitet mittels eines Verstellgestänges mit einem gehäuseseitigen Ende der Kugelstange zusammen.

Aufgabe der Erfindung ist es, für eine Anhängekupplung eines Kraftfahrzeugs ein Betätigungssystem zu konzipieren, das sich bezüglich Entriegeln und Verriegeln eines mit einem Kugelhalslagerkopf verbundenen Kugelhals durch eine funktionsgerechte und leicht umsetzbare Konstruktion auszeichnet. Dabei sollte aber auch sichergestellt sein, dass das Betätigungssystem bauraumgünstig und mit vertretbaren Maßnahmen in das Kraftfahrzeug integrierbar ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Der Kugelhals ist beispielsweise zwischen einer Betriebsstellung, die zum Ziehen eines Anhängers vorgesehen ist, und einer Ruhestellung an dem Kugelhalslagerkopf beweglich gelagert, in der der Kugelhals beispielsweise näher beim Heck des Kraftfahrzeugs angeordnet ist, zum Beispiel in einem Ruhestellungsraum zwischen Stoßfänger und Karosserie im Wesentlichen verborgen ist.

Der Schwenkmechanismus ist dazu vorgesehen, den Kugelhals zwischen der Betriebsstellung und der Ausstellung zu verstellen. Der Elektromotor ermöglicht zweckmäßigerweise beides, nämlich zum einen die Betätigung des Verriegelungsmechanismus' und zum andern des Schwenkmechanismus'.

Der Kugelhals ist am und/oder im Kugelhalslagerkopf schwenkbar und vorzugsweise zudem auch verschieblich gelagert. Mithin ist also auch eine Axial-Verschiebung zusätzlich zu einer Schwenkbewegung des Kugelhalses relativ zum fahrzeugfest festgelegten oder festlegbaren Kugelhalslagerkopf möglich. Der Kugelhals kann auch bezüglich des Kugelhalslagerkopfs ausschließlich schwenkbar sein.

Der Kugelhalslagerkopf kann eine Aufnahme, in die der Kugelhals mit einem entsprechenden Lagerzapfen eingreift und/oder einen insbesondere als Lagerzapfen ausgestalteten Lagervorsprung aufweisen, auf dem der Kugelhalslagerkopf gelagert ist.

An dieser Stelle sei erwähnt, dass der Kugelhals selbstverständlich auch andere Kuppelelemente zum Ankuppeln eines Anhängers oder eines Lastenträgers tragen kann als eine Kugel, beispielsweise eine Steckaufnahme haben kann oder dergleichen.

Der Sperrbolzen ist zweckmäßigerweise in seine Verriegelungsstellung oder seine Entriegelungsstellung durch eine Federanordnung federbelastet.

Die mit der Erfindung hauptsächlich erzielten Vorteile sind darin zu sehen, dass das Betätigungssystem der Anhängekupplung vorbildlich gestaltet ist, weil es dank des ausgeklügelten Getriebesystems mit einem einzigen Elektromotor sowohl den Verriegelungsmechanismus wie auch den Schwenkmechanismus antreibt, und zwar mit einer sinnreichen Ablaufsteuerung. Dabei verfügt das Getriebesystem über die mit dem Elektromotor zusammenarbeitende hochwirksame Antriebswelle, mit der die Hohlwelle gedreht wird. Die Hohlwelle wird von der axialbeweglichen die Steuerbahn aufweisende Steuerhülse umgeben, die mittels des Steuerhebels den Sperrbolzen des Verriegelungsmechanismus in axialer Richtung betätigt. Hierbei ist hervorzuheben, dass die Hohlwelle das Steuerglied in Gestalt der Rolle trägt, mit der die Steuerbahn ausgezeichnet zusammenarbeitet, wobei die Steuerhülse am Umfang von dem Hüllkörper Beispiel gebend umschlossen wird.

Musterhaft ist, dass der Steuerhebel den Umfang des Hüllkörpers mit den Lagerarmen der Traggabel umgreift und die freien Enden der Lagerarme des Steuerhebels am Hüllkörper schwenkbar angebracht sind. Unterstützt wird letzteres dadurch, dass der Steuerhebel als zweiarmiger Hebel ausgeführt ist, der mit einer koaxialen Verlängerung des Sperrbolzens in Wirkverbindung steht. Vorteilhaft in diesem Zusammenhang ist, dass die Antriebswelle des Getriebesystems mit einem Schneckenrad versehen ist, welches Schneckenrad mit dem als Schneckenwelle ausgebildeten Abtriebszapfen des Elektromotors kooperiert. Und der Abtriebszapfen des Elektromotors und die Antriebswelle des Getriebesystems schließen bspw. einen rechten Winkel ein.

Das Konzept des Getriebesystems setzt Maßstäbe, weil die Antriebswelle einen axialen Verlängerungsabschnitt aufweist, der mit der Winkelwelle gekoppelt ist, welche Winkelwelle das Sekundärgetriebe gezielt antreibt. Dazu leistet die Winkelwelle einen hochrangigen Beitrag, die das erste Zahnrad des Sekundärgetriebes in Rotation versetzt. Darüber hinaus kämmt das erste Zahnrad mit dem zweiten Zahnrad, das unter Zwischenschaltung des Verbindungsglieds mit dem beweglichen Teil des Kugelhalslagerkopfs drehfest verbunden ist. Vereinfacht wird dieses Verbindungsglied dadurch, dass es durch eine drehmomentübertragende Balgkupplung gebildet wird. Die Winkelwelle ist ein aufwandsarm darstellbares Bauelement, dessen erste und zweite Enden mit ersten und zweiten Kreuzgelenken versehen sind. Das erste Kreuzgelenk ist mit einem buchsenartigen Lagerbolzen versehen, der in einem Lager des Getriebesystems rotiert. Schließlich gwährleistet der Freilauf, der dem ersten Zahnrad zugeordnet ist, eine gezielte Funktion der Ablaufsteuerung des Betätigungssystems.

In der Zeichnung wird ein Ausführungsbeispiel der Erfindung gezeigt, das nachstehend näher erläutert wird.

Es zeigen:

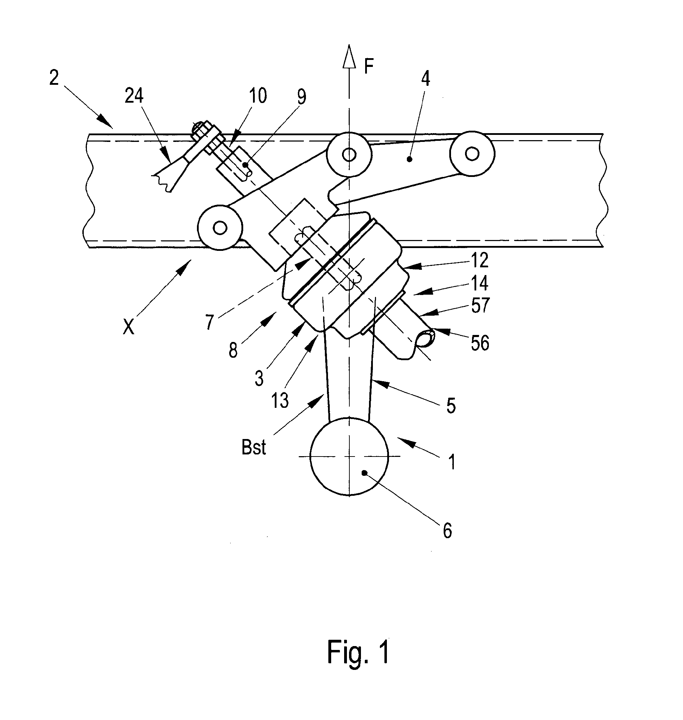

- Fig. 1: eine schematische Ansicht von oben auf eine Anhängekupplung für ein Kraftfahrzeug mit einem Querträger, an dem ein Kugelhalslagerkopf mit einem Kugelhals in Lage gehalten wird,
- Fig. 2: eine Einzelheit X der Fig. 1 in größerem Maßstab,
- Fig. 3: eine schematische Ansicht etwa in Pfeilrichtung Y der Fig. 2,
- Fig. 4: eine schematische Ansicht etwa in Pfeilrichtung Z der Fig. 2,

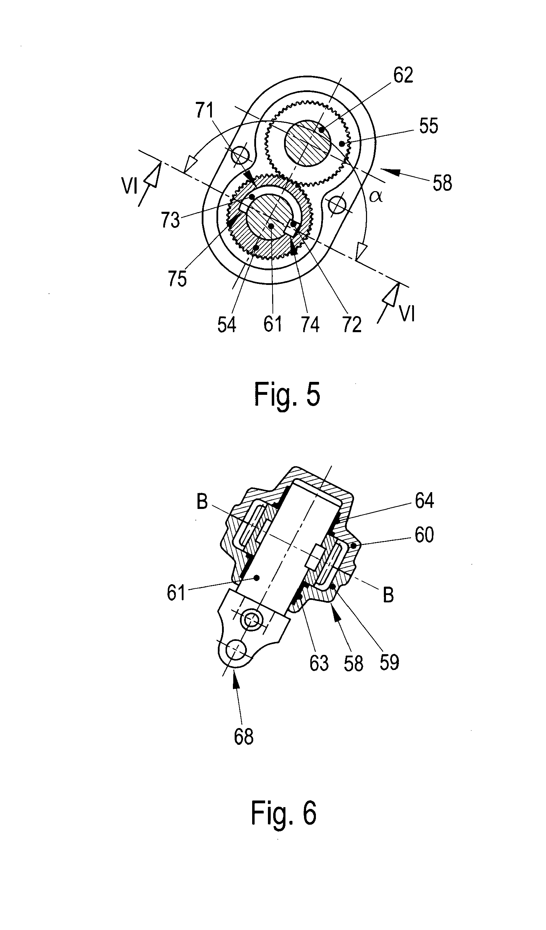

- Fig. 5: einen Schnitt nach der Linie V-V der Fig. 2,
- Fig. 6: einen Schnitt etwa nach der Linie VI-VI der Fig. 5.

Eine Anhängekupplung 1 für ein nicht näher dargestelltes Kraftfahrzeug, dessen Fahrtrichtung mit F angegeben ist, ist z.B. in einem Heck dieses Kraftfahrzeugs befestigt und weist einen Querträger 2 auf, an dem ein Kugelhalslagerkopf 3 unter Vermittlung einer Lagerkonsole 4 gehalten wird. Der Kugelhalslagerkopf 3 trägt einen Kugelhals 5, der an einem freien Ende mit einer Kupplungskugel 6 versehen ist. In den Kugelhalslagerkopf 3 eingebaut ist ein axial beweglicher Sperrbolzen 7 eines Verriegelungsmechanismus 8. Nach mechanischer Beeinflussung bzw. Ausrücken des Verriegelungsmechanismus 8 ist der Kugelhals 5 von einer Betriebsstellung Bst in eine Ruhestellung -nicht gezeigt- bewegbar. Einzelheiten des Sperrbolzens 7 sind in der bereits eingangs zitierten DE 103 20 302 A1 dargestellt. Der Sperrbolzen 7 ist mit einer koaxialen Verlängerung 9 verbunden, die als Schubstange 10 des Sperrbolzens 7 dient.

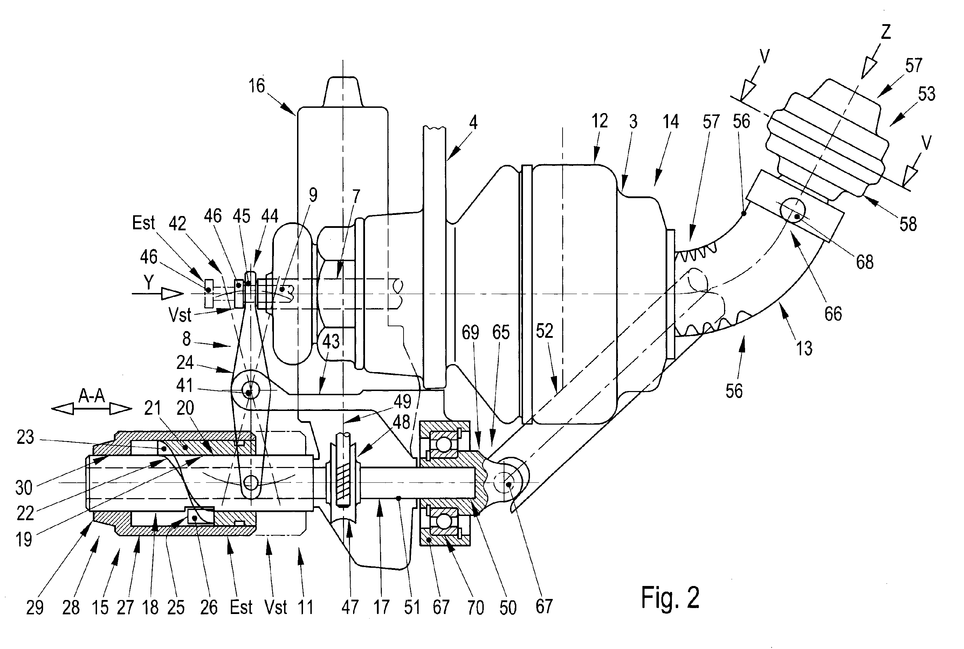

Ein Betätigungssystem 11 -Fig. 2- für die Anhängekupplung 1 bzw. den Kugelhals 5 und den beweglichen Teil 12 des Kugelhalslagerkopfs 3 wirkt mit dem Verriegelungsmechanismus 8 zusammen, und zwar zum Ein- und Ausrücken des Sperrbolzens 7. Neben dem Verriegelungsmechanismus 8 verfügt das Betätigungssystem 11 auch noch über einen Schwenkmechanismus 13 für die aus Kugelhals 5 und Kugelhalslagerkopf 3 bestehende Baueinheit 14. Zwischen dem Verriegelungsmechanismus 8 und dem Schwenkmechanismus 13 ist ein Getriebesystem 15 wirksam. Das eine Ablaufsteuerung bewirkende Getriebesystem 15 wird von einem Elektromotor 16 beeinflusst, dergestalt, dass zunächst der Verriegelungsmechanismus 8 und nach dessen Ausrücken oder Entriegeln der Schwenkmechanismus 13 aktiviert wird.

Das Getriebesystem 15 besitzt eine mit dem Elektromotor 16 zusammenwirkende Antriebswelle 17, die eine Hohlwelle 18 in Drehbewegung versetzt. Hierzu ist die Hohlwelle 18 über ein Außengewinde 19 mit einem Innengewinde 20 einer Steuerhülse 21 verbunden. Der Außendurchmesser der Hohlwelle 18 wird unmittelbar von der lediglich axial beweglichen -in Richtung A-A- Steuerhülse 21 umgeben, die an einer von der Antriebswelle 17 abgekehrten Stirnseite 22 eine Steuerbahn 23 aufweist. Durch ihre Axialbewegung A-A beeinflusst die Steuerhülse 21 unter Zwischenschaltung eines Steuerhebels 24 den Sperrbolzen 7 des Verriegelungsmechanismus 8. Am Umfang der Hohlwelle 18 ist ein Steuerglied 25 befestigt, das im Ausführungsbeispiel als rotierbar gelagerte Rolle 26 ausgeführt ist und mit der Steuerbahn 23 in Wirkverbindung steht.

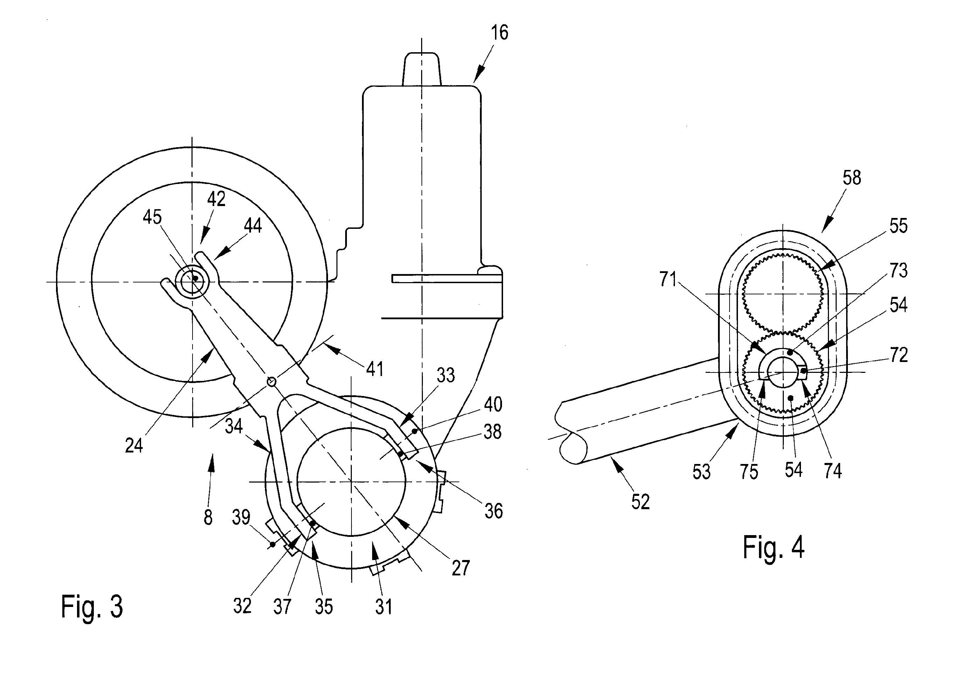

Die Steuerhülse 21 wird von einem im Querschnitt rohrförmigen Hüllkörper 27 umgeben, der -in axialer Richtung betrachtetabschnittsweise die Steuerhülse 21 fest umgibt. An einem von der Steuerhülse 21 entfernt liegenden Endbereich 28 ist der Hüllkörper 27 mit einem Kragen 29 versehen, der als Lager 30 für die drehende Hohlwelle 18 dient. Der Steuerhebel 24 umgreift den äußeren Umfang 31 des Hüllkörpers 27 mit Lagerarmen 32 und 33 einer Traggabel 34 -Fig. 3-. Freie Enden 35 und 36 der Lagerarme 32 und 33 sind an Lagerstützen 37 und 38 des Hüllkörpers 27 herangeführt und mittels Lagergliedern 39 und 40 mit letzterem verbunden. Aus den Fig. 2 und 3 ist ersichtlich, dass der Steuerhebel 24 prinzipiell als zweiarmiger Hebel ausgeführt ist und über eine Schwenkachse 41 winkelbeweglich ist. Auf einem den Lagergliedern 39 und 40 abgekehrten Endbereich 42 ist der Steuerhebel 24 mit der Verlängerung 9 des Sperrbolzens 7 des Verriegelungsmechanismus 8 verbunden, wobei die Schwenkachse 41 an einer fahrzeugfesten Konsole 43 gehalten wird. Eine Verbindungsgabel 44 umgreift einen kreisförmigen Querschnitt 45 der Verlängerung 9, die mit einem radialen Begrenzungselement 46 für die die Verbindungsgabel 44 in axialer Richtung lagebestimmend ist. Über den Steuerhebel ist die Verlängerung 9 des Sperrbolzens 7 zwischen einer Verriegelungsstellung Vst und einer Entriegelungsstellung Est bewegbar -Fig.2-.

Die Antriebswelle 17 des Getriebesystems 15 ist mit einem Schneckenrad 47 versehen, das mit einem als Schneckenwelle 48 ausgebildeten Abtriebszapfen 49 des Elektromotors 16 in Wirkverbindung steht. Bei dieser Ausführungsform schließen der Abtriebszapfen 49 des Elektromotors 16 und die Antriebswelle 17 des Getriebesystems 15 einen rechten Winkel ein. Die Antriebswelle 17 weist auf einem von der Hohlwelle 18 abgekehrten Ende 50 einen Verlängerungsabschnitt 51 auf, der mit einer Winkelwelle 52 gekoppelt ist. Die Winkelwelle 52 beeinflusst auf einer
entfernt von der Antriebswelle 17 liegenden Seite ein Sekundärgetriebe 53, und die Winkelwelle 52 treibt ein erstes Zahnrad 54 des Sekundärgetriebes 53 an. Das erste Zahnrad 54 kämmt mit einem zweiten Zahnrad 55 -beide mit Stirnradverzahnung-des Sekundärgetriebes 53, das unter Zwischenschaltung eines Verbindungsglieds 56 drehfest mit dem beweglichen Teil 12 des Kugelhalslagerkopfs 3 verbunden ist. Das Verbindungsglied 56 wird durch eine drehmomentübertragende Balgkupplung 57 gebildet.

Die Zahnräder 54 und 55 sind in einem Getriebegehäuse 58 gelagert, das aus zwei Gehäuseschalen 59 und 60 besteht. Diese sind in einer quer zu Lagerbolzen 61 und 62 der Zahnräder 54 und 55 verlaufenden Verbindungsebene B-B zusammengesetzt. In die Gehäuseschalen 59 und 60 eingearbeitet sind Lagerbereiche 63 und 64 für die Lagerbolzen 61 und 62. Die Winkelwelle 52 ist an ersten und zweiten Enden 65 und 66 mit ersten und zweiten Kreuzgelenken 67 und 68 versehen. Das erste Kreuzgelenk 67 umfasst ein buchsenartiges Drehelement 69, das die Antriebswelle 17 drehfest umschließt. Das Drehelement 69 rotiert in einem Lager 70 des Getriebesystems 15. Schließlich arbeitet das erste Zahnrad 54 mit einem der Ablaufsteuerung des Getriebesystems 15 dienenden Freilauf 71 zusammen, der einen Mitnehmerzapfen 72, angetrieben von der Winkelwelle 52, besitzt und in einer halbkreisförmigen Freilaufbahn 73 des ersten Zahnrads beweglich ist. Die Freilaufbahn 73 wird von Anschlägen 74 und 75 begrenzt, die im Winkel α von 180° zueinander angeordnet sind.

## Patentansprüche

1. Betätigungssystem für eine Anhängekupplung eines Kraftfahrzeugs, die einen an einem Kugelhalslagerkopf gehaltenen Kugelhals aufweist, welcher Kugelhalslagerkopf mit einem Verriegelungsmechanismus für den Kugelhals in einer Betriebsstellung und einer Ruhestellung festlegbar ist, wobei der Verriegelungsmechanismus einen axialbeweglichen in dem Kugelhalslagerkopf gelagerten Sperrbolzen zum Ein- und Ausrücken des Verriegelungsmechanismus umfasst, **dadurch gekennzeichnet, dass** das Betätigungssystem (11) neben dem Verriegelungsmechanismus (8) des Kugelhalslagerkopfs (3) über einen Schwenkmechanismus (13) für die aus Kugelhals (5) und Kugelhalslagerkopf (3) bestehende Baueinheit (14) verfügt, wobei zwischen dem Verriegelungsmechanismus (8) und dem Schwenkmechanismus (13) ein eine Ablaufsteuerung bewirkendes Getriebesystem (15) vorgesehen ist, das von einem Elektromotor (16) in der Weise beeinflusst wird, dass zunächst der Verriegelungsmechanismus (8) und danach der Schwenkmechanismus (13) aktiviert wird.

2. Betätigungssystem nach Anspruch 1, **dadurch gekennzeichnet, dass** das Getriebesystem (15) eine mit dem Elektromotor (16) zusammenwirkende Antriebswelle (17) besitzt, die eine Hohlwelle (18) dreht, welche Hohlwelle (18) von einer axial beweglichen und an einer Stirnseite (22) eine radial verlaufende Steuerbahn (23) aufweisenden Steuerhülse (21) umgeben wird, die unter Zwischenschaltung eines Steuerhebels (24) den Sperrbolzen (7) des Verriegelungsmechanismus (8)) beeinflusst.

3. Betätigungssystem nach Anspruch 2, **dadurch gekennzeichnet, dass** am Umfang der Hohlwelle (18) ein Steuerglied (25) z.B. in Form einer Rolle (26) angebracht ist, die in Wirkverbindung mit der Steuerbahn (23) steht.

4. Betätigungssystem nach Anspruch 2 oder 3, **dadurch gekennzeichnet, dass** die Steuerhülse (21) von einem im Querschnitt rohrförmigen Hüllkörper (27) umgeben ist, der einerseits die Steuerhülse (21) umschließt und andererseits mit einem Kragen (29) die Hohlwelle lagert.

5. Betätigungssystem nach einem der Ansprüche 2 bis 4, **dadurch gekennzeichnet, dass** der Steuerhebel (24) den Umfang des Hüllkörpers (27) mit Lagerarmen (32 und 33) einer Traggabel (34) umgreift, wobei freie Enden (35 und 36) der Lagerarme (32 und 33) des Steuerhebels (24) unter Zwischenschaltung von Lagergliedern (39 und 40) mit dem Hüllkörper (27) verbunden sind.

6. Betätigungssystem nach einem der Ansprüche 2 bis 5, **dadurch gekennzeichnet, dass** der Steuerhebel (24) als zweiarmiger Hebel ausgeführt ist, der auf dem den Lagergliedern (39 und 40) abgekehrten Endbereich (42) mit einer koaxialen Verlängerung (9) des Sperrbolzens (7) zusammenarbeitet.

7. Betätigungssystem nach einem der vorhergehenden Ansprüche, **dadurch gekennzeichnet, dass** die Antriebswelle (17) des Getriebesystems (15) mit einem Schneckenrad (47) versehen ist, das mit einem als Schneckenwelle (48) ausgebildeten Abtriebszapfen (49) des Elektromotors (16) in Wirkverbindung steht, wobei der Abtriebszapfen (49) und die Antriebswelle (17) vorzugsweise winkelig sind, insbesondere einen rechten Winkel einschließen.

8. Betätigungssystem nach einem der vorhergehenden Ansprüche, **dadurch gekennzeichnet, dass** die Antriebswelle (17) einen axialen Verlängerungsabschnitt (51) aufweist, der mit einer Winkelwelle (52) gekoppelt ist, welche Winkelwelle (52) ein Sekundärgetriebe (53) des Schwenkmechanismus (13) beeinflusst.

9. Betätigungssystem nach Anspruch 8, **dadurch gekennzeichnet, dass** die Winkelwelle (52) ein erstes Zahnrad (54) des Sekundärgetriebes (53) antreibt, welches erste Zahnrad (54) mit einem zweiten Zahnrad (55) des Sekundärgetriebes (53) kämmt, das unter Zwischenschaltung eines drehmomentübertragenden Verbindungsglieds (56) mit dem beweglichen Teil (12) des Kugelhalslagerkopfs (3) verbunden ist.

10. Betätigungssystem nach Anspruch 9, **dadurch gekennzeichnet, dass** das Verbindungsglied (56) durch eine Balgkupplung (57) gebildet wird.

11. Betätigungssystem nach den Ansprüchen 8 und 9, **dadurch gekennzeichnet, dass** erste und zweite Enden (65 und 66) der Winkelwelle (52) mit ersten und zweiten Kreuzgelenken (67 und 68) versehen sind.

12. Betätigungssystem nach einem der vorhergehenden Ansprüche, **dadurch gekennzeichnet, dass** das erste Kreuzgelenk (67) eine die Antriebswelle (17) umschließende fest mit der besagten Antriebswelle (17) verbundenes buchsenartiges Drehelement (69) aufweist, die in einem Lager (70) des Getriebesystems (15) rotiert.

13. Betätigungssystem nach einem der vorhergehenden Ansprüche, **dadurch gekennzeichnet, dass** das Sekundärgetriebe (53) im Bereich des ersten Zahnrads (54) mit einem Freilauf (71) versehen ist, der der Ablaufsteuerung dient.

14. Betätigungssystem nach einem der vorhergehenden Ansprüche, **dadurch gekennzeichnet, dass** der Kugelhals (5) zwischen einer zum Ziehen eines Anhängers vorgesehenen Betriebsstellung und einer näher zum Kraftfahrzeug hin verstellten Ruhestellung an dem Kugelhalslagerkopf (3) schwenkbar und vorteilhaft zudem verschieblich gelagert ist, wobei der Schwenkmechanismus (13) zweckmäßigerweise zum Verschwenken des Kugelhalses (5) zumindest auf einem Teilabschnitt des Weges zwischen der Betriebsstellung und der Ruhestellung vorgesehen ist.

15. Anhängekupplung mit einem Betätigungssystem (11) nach einem der vorhergehenden Ansprüche, **dadurch gekennzeichnet, dass** sie einen an oder in einem fahrzeugseitig festlegbaren oder festgelegten Kugelhalslagerkopf (3) schwenkbar und vorteilhaft zudem verschieblich gelagerten Kugelhals (5) aufweist, der in zumindest einer Stellung, insbesondere einer zum Ziehen eines Anhängers geeigneten Arbeitsposition, anhand eines Verriegelungsmechanismus' verriegelbar ist, wobei der Verriegelungsmechanismus anhand des Betätigungssystems (11) verriegelbar und/oder entriegelbar ist.
